# FASCICULE DE BREVET EUROPEEN

(11) **EP 0 473 494 B1**
(45) Date de publication et mention de la délivrance du brevet: **12.01.1994**
(21) Numéro de dépôt: 91402277.7
(22) Date de dépôt: 21.08.1991
(51) Int. Cl.: F02C 7/236

(54) **Circuit d'alimentation en carburant d'un turbo-moteur**
Brennstoffversorgungssystem für einen Turbomotor
Fuel supply system for a turbo-engine

(30) Priorité: 22.08.1990 FR 9010545
(43) Date de publication de la demande: 04.03.1992
(73) Titulaire: SOCIETE NATIONALE D'ETUDE ET DE CONSTRUCTION DE MOTEURS D'AVIATION, "S.N.E.C.M.A.", F-75015 Paris (FR)
(72) Inventeur: Mouton, Pierre Charles, F-91350 Grigny (FR)
(74) Mandataire: Berrou, Paul

(56) Documents cités:
- GB-A- 735 874
- US-A- 4 339 917

## Description

L'invention concerne un circuit d'alimentation en carburant d'un turbo-moteur, utilisable en particulier dans l'industrie aéronautique.

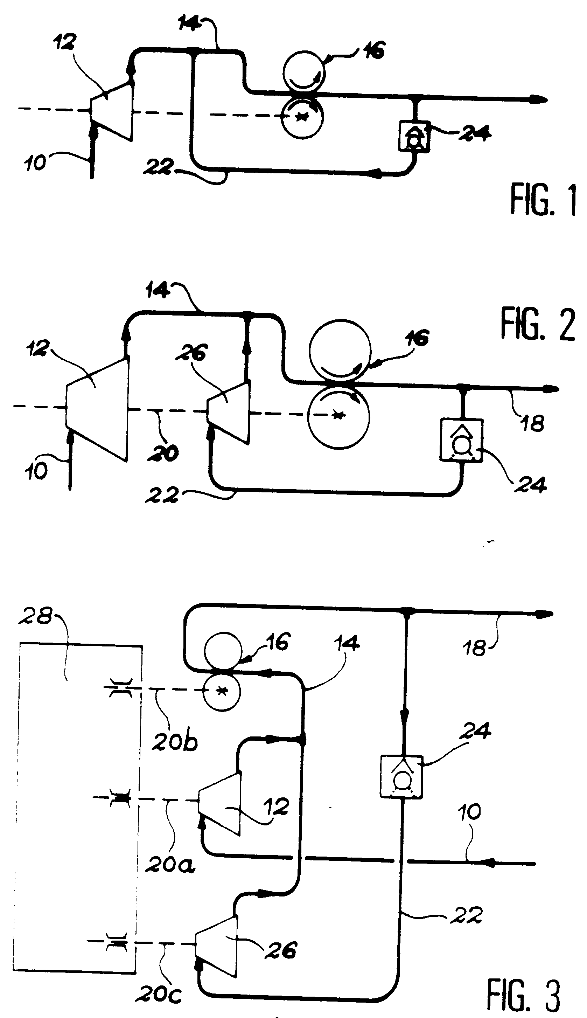

Comme l'illustre très schématiquement la figure 1, un circuit classique d'alimentation en carburant d'un turbo-moteur moderne comporte généralement une pompe basse pression 12, alimentée en carburant par une canalisation 10, et une pompe volumétrique haute pression 16 à cylindrée fixe, communiquant avec la pompe basse pression 12 par une canalisation 14 et refoulant le carburant dans le turbo-moteur par une canalisation 18. Les pompes 12 et 16 sont entraînées par le turbomoteur, et la pompe haute pression 14 est dimensionnée afin d'assurer l'alimentation en carburant pour le point le plus critique des conditions de vol, qui correspond généralement soit au démarrage (régime subsonique du turbo-moteur) soit au régime maximum (régime supersonique du turbo-moteur).

Par conséquent, la pompe volumétrique haute pression 16 du circuit d'alimentation en carburant est surdimensionnée pour tous les autres points des conditions de vol et en particulier dans le cas où le régime de rotation du turbo-moteur est élevé et la consommation en carburant faible. Ces conditions, dans lesquelles le débit de la pompe haute pression 16 peut être environ 40 fois plus élevé que le débit consommé par le turbomoteur, correspondant généralement à un vol à haute altitude et à faible vitesse.

Le carburant excédentaire à haute pression délivré par la pompe volumétrique 16 est alors renvoyé à l'entrée de la pompe par une canalisation 22 de retour d'excédent de carburant, à travers une soupape régulatrice 24. Au passage de cette soupape, la pression du débit de carburant excédentaire est dégradée d'un niveau haute pression à un niveau basse pression par simple perte de charge. L'énergie potentielle perdue est donc intégralement transformée en chaleur qui contribue à échauffer le carburant dans le circuit d'alimentation en carburant.

Ce phénomène, observé dans tous les cas, est particulièrement sensible sur les moteurs double corps double flux à fort taux de compression. Il peut correspondre à des échauffements de la température du carburant dans le circuit d'alimentation de plusieurs dizaines de degrés.

Cette élévation excessive de la température du carburant dans le circuit d'alimentation constitue un inconvénient notable lorsqu'on sait que le carburant constitue, sur un avion, un moyen efficace et facile d'emploi pour refroidir une grande diversité de systèmes.

Dans le document US-A-4 339 917, on a proposé d'utiliser une partie du carburant excédentaire disponible dans certaines conditions de vol à la sortie de la pompe volumétrique haute pression pour actionner une turbine dont l'arbre de sortie entraîne directement le rotor de la pompe basse pression placée en amont de la pompe haute pression dans le circuit d'alimentation en carburant.

Dans un circuit d'alimentation en carburant ainsi conçu, une partie de l'énergie potentielle perdue à la sortie de la pompe haute pression est donc transformée en énergie mécanique, de sorte que l'accroissement de la température du carburant est moindre que dans les circuits d'alimentation classiques décrits précédemment. Cependant, cette solution n'est pas dépourvue d'inconvénients.

En effet, étant donné que la pompe basse pression du circuit d'alimentation en carburant n'est entraînée par la turbine que lorsqu'il existe un excédent de carburant à la sortie de la pompe haute pression, ce qui n'est pas le cas notamment au démarrage, cela nécessite d'utiliser une pompe haute pression surdimensionnée afin précisément que la pompe basse pression soit actionnée dès le démarrage. Ce surdimensionnement de la pompe haute pression se traduit par un accroissement de la température qui annule en grande partie l'effet inverse obtenu par la transformation d'une partie de l'énergie potentielle disponible à la sortie de la pompe haute pression en énergie mécanique.

L'invention a précisément pour objet un circuit d'alimentation en carburant d'un type nouveau, qui permet de réduire de façon sensible l'échauffement du carburant dans les conditions de vol pour lesquelles la pompe haute pression fournit l'excédent de débit le plus important, sans nécessiter un surdimensionnement quelconque de la pompe haute pression par rapport aux circuits classiques.

Selon l'invention, ce résultat est obtenu au moyen d'un circuit d'alimentation en carburant d'un turbo-moteur, comprenant une pompe volumétrique haute pression dont un arbre d'entraînement est entraîné par le turbo-moteur, et une canalisation de retour d'excédent de carburant, placée en parallèle sur la pompe volumétrique haute pression comprenant un moyen de régulation de pression, et comprenant au moins un organe moteur placé dans la canalisation de retour, en aval du moyen de régulation de pression, caractérisé par le fait que cet organe moteur est relié mécaniquement à l'arbre d'entraînement de la pompe volumétrique.

Dans un circuit d'alimentation en carburant ainsi réalisé, l'excédent de carburant disponible dans certaines conditions de vol à la sortie de la pompe volumétrique haute pression est partiellement transformé en énergie mécanique. L'échauffement du carburant dû à la chute de pression au travers de la soupape régulatrice est donc réduit. De plus, ce résultat est obtenu sans qu'il soit nécessaire de surdimensionner la pompe haute pression, puisque les pompes basse pression et haute pression du circuit d'alimentation en carburant sont entraînées par le turbo-moteur comme dans les circuits classiques.

De préférence, l'organe moteur est une turbine.

Selon le cas, cet organe moteur peut être soit monté directement sur l'arbre d'entraînement de la pompe volumétrique, soit relié mécaniquement à cet arbre d'entraînement par un boîtier d'accessoires au travers duquel l'arbre d'entraînement est entraîné par le turbo-moteur.

Un mode de réalisation préféré de l'invention va à présent être décrit, à titre d'exemple non limitatif, en se référant aux dessins annexés, dans lesquels :
- la figure 1, déjà décrite, représente de façon schématique un circuit traditionnel d'alimentation en carburant d'un turbo-moteur ;
- la figure 2 est une vue schématique comparable à la figure 1 représentant un circuit d'alimentation en carburant conforme à l'invention ; et
- la figure 3 est une vue comparable à la figure 2 représentant une variante de réalisation du circuit d'alimentation en carburant selon l'invention.

Sur la figure 2, la référence 10 désigne une canalisation du circuit d'alimentation en carburant, par laquelle le carburant en provenance des réservoirs (non représentés) pénètre par l'orifice d'aspiration d'une pompe basse pression 12 telle qu'un compresseur centrifuge. Une canalisation 14 relie l'orifice de refoulement de la pompe basse pression 12 à l'orifice d'aspiration d'une pompe volumétrique haute pression 16, à cylindrée fixe, telle qu'une pompe à engrenage. L'orifice de refoulement de la pompe haute pression 16 est relié au turbo-moteur alimenté par le circuit au travers d'une canalisation 18.

Comme dans les circuits d'alimentation en carburant classiques, la pompe basse pression 12 et la pompe haute pression 16 sont entraînées mécaniquement par le turbo-moteur, par l'intermédiaire d'un arbre d'entraînement représenté schématiquement par la référence 20 sur la figure 2, cet arbre 20 portant à la fois le rotor de la pompe basse pression 12 et l'engrenage moteur de la pompe à engrenage 16.

D'une manière également classique, une canalisation 22 de retour d'excédent de carburant est branchée en dérivation sur la canalisation 18, à la sortie de la pompe haute pression 16. Cette canalisation 22 de retour d'excédent de carburant est raccordée par son autre extrémité sur la canalisation 14, c'est-à-dire entre la pompe basse pression 12 et la pompe haute pression 16. Elle supporte une soupape de régulation de pression 24 qui permet, par simple perte de charge, d'abaisser la pression du carburant en excès recyclé par la canalisation 22 en amont de la pompe haute pression 16.

Conformément à l'invention, un organe moteur, constitué dans l'exemple de réalisation illustré sur la figure 2 par une turbine 26, est placé dans la canalisation 22 de retour d'excédent de carburant, en aval de la soupape de régulation de pression 24. Le rotor de la turbine 26 est monté sur l'arbre d'entraînement 20 des pompes 12 et 16.

La turbine 26 peut être une turbine centripète ou axiale. Elle peut aussi être remplacée par plusieurs turbines en série, toutes calées sur l'arbre d'entraînement 20. De façon générale, l'organe moteur que constitue la turbine 26 présente une perméabilité aussi grande que possible, afin de permettre le transfert du débit maximum de carburant recyclé au travers de la canalisation 22 de retour d'excédent de carburant.

L'organe moteur constitué dans le mode de réalisation représenté sur la figure 2 par la turbine 26 est de préférence adapté afin que son rendement énergétique soit optimisé pour le point d'échauffement le plus critique. Ainsi, le rendement de la turbine 26 peut atteindre par exemple une valeur maximum d'environ 50 % lorsque l'avion se déplace à faible vitesse et à haute altitude. Dans ces conditions, l'échauffement du carburant peut être réduit de moitié par rapport aux circuits d'alimentation en carburant traditionnels.

Grâce à l'agencement qui vient d'être décrit en se référant à la figure 2, on comprend qu'une partie du débit excédentaire de carburant sortant de la pompe haute pression 16 est transférée à l'arbre d'entraînement 20 des pompes 12 et 16 par la turbine 26, sous forme d'énergie mécanique. Il en résulte que l'énergie thermique créée par la chute de pression du débit excédentaire dans la soupape 24 de régulation de pression est réduite par rapport aux circuits existants. A titre d'exemple non limitatif, l'élévation de température du carburant peut atteindre environ 50°C avec le circuit d'alimentation en carburant selon l'invention, alors que cette élévation de température pouvait atteindre environ 80°C dans les circuits classiques.

Sur la figure 3, on a représenté une variante de réalisation du circuit d'alimentation en carburant conforme à l'invention.

Pour l'essentiel le circuit illustré sur la figure 3 est identique à celui de la figure 2. On y retrouve notamment la pompe basse pression 12 alimentée par la canalisation 10, la pompe volumétrique haute pression 16 alimentée par la canalisation 14 et la canalisation 18 par laquelle le carburant sortant de la pompe haute pression 16 est injecté dans le turbo-moteur. On retrouve également sur la figure 3 la canalisation 22 de retour d'excédent de carburant, ainsi que la soupape de régulation de pression 24 et la turbine 26 placées dans cette canalisation 22.

Le circuit d'alimentation en carburant illustré sur la figure 3 diffère essentiellement du circuit de la figure 2 par le fait qu'au lieu d'être monté sur un arbre d'entraînement commun, le rotor de la pompe basse pression 12, l'engrenage moteur de la pompe haute pression 16 et le rotor de la turbine 26 sont montés sur trois arbres distincts, désignés respectivement par les références 20a, 20b et 20c sur la figure 3. Ces trois arbres d'entraînement 20a, 20b et 20c sont reliés mécaniquement entre eux au travers d'un boîtier d'accessoires 28. Ainsi, les arbres d'entraînement 20a et 20b des pompes basse pression 12 et haute pression 16 sont entraînés par le turbo-moteur au travers du boîtier d'accessoires 28 et l'arbre de la turbine 20c est relié mécaniquement aux arbres d'entraînement 20a et 20b des deux pompes au travers du boîtier d'accessoires 28.

Par conséquent, comme dans le mode de réalisation décrit précédemment en se référant à la figure 2, la chute de pression du débit excédentaire de carburant à la sortie de la pompe haute pression 16 est transformée en partie en énergie mécanique dans la turbine 26, de sorte que l'échauffement du carburant est réduit par rapport aux circuits d'alimentation en carburant classiques.

Bien entendu, l'invention n'est pas limitée aux modes de réalisation qui viennent d'être décrits à titre d'exemples, mais en couvre toutes les variantes. Ainsi, comme on l'a déjà mentionné, la turbine 26 peut être remplacée par plusieurs turbines placées en série ou par un ou plusieurs organes(s) moteur(s) techniquement équivalent(s). De façon comparable, la soupape de régulation de pression 24 peut être remplacée par tout moyen de régulation de pression remplissant la même fonction.

## Revendications

1. Circuit d'alimentation en carburant d'un turbo-moteur, comprenant une pompe volumétrique haute pression (16) dont un arbre d'entraînement est entraîné par le turbo-moteur et une canalisation (22) de retour d'excédent de carburant, placée en parallèle sur la pompe volumétrique haute pression comprenant un moyen (24) de régulation de pression, et comprenant au moins un organe moteur (26) placé dans la canalisation de retour (22), en aval du moyen (24) de régulation de pression, caractérisé par le fait que cet organe moteur est relié mécaniquement à l'arbre d'entraînement (20a,20b) de la pompe volumétrique.

2. Circuit selon la revendication 1, caractérisé par le fait que ledit organe moteur est une turbine (26).

3. Circuit selon l'une quelconque des revendications 1 et 2, caractérisé par le fait que l'organe moteur (26) est monté directement sur l'arbre d'entraînement (20) de la pompe volumétrique (16).

4. Circuit selon l'une quelconque des revendications 1 et 2, caractérisé par le fait que l'organe moteur (26) est relié mécaniquement à l'arbre d'entraînement (20b) de la pompe volumétrique (16) par un boîtier d'accessoires (28) au travers duquel ledit arbre d'entraînement est entraîné par le turbo-moteur.

## Claims

1. Fuel supply circuit for a gas turbine engine, comprising a high pressure positive displacement pump (16) of which a drive shaft is driven by the gas turbine engine and an excess fuel return pipe (22), placed in parallel with the high pressure positive displacement pump, comprising a pressure regulation means (24), and comprising at least one motor organ (26) placed in the return pipe (22) downstream of the pressure regulation means (24), characterised by the fact that this motor organ is mechanically coupled to the drive shaft (20a, 20b) of the positive displacement pump.

2. Circuit in accordance with Claim 1, characterised by the fact that the said motor organ is a turbine (26).

3. Circuit in accordance with either of Claims 1 and 2, characterised by the fact that the motor organ (26) is fitted directly to the drive shaft (20) of the positive displacement pump (16).

4. Circuit in accordance with either of Claims 1 and 2, characterised by the fact that the motor organ (26) is coupled mechanically to the drive shaft (20b) of the positive displacement pump (16) by a gearbox (28) through which the said drive shaft is driven by the gas turbine engine.

## Patentansprüche

1. Brennstoffversorgungssystem für einen Turbomotor, bestehend aus einer Hochdruck-Zumeßpumpe (16), deren Antriebswelle von dem Turbomotor angetrieben wird, und einer Leitung (22) für den Rückfluß des überschüssigen Brennstoffs, die parallel auf der Hochdruck-Zumeßpumpe angeordnet ist, ein Mittel (24) zur Druckregulierung aufweist und wenigstens ein Antriebselement (26) aufweist, das in der Rückflußleitung (22) nach dem Mittel (24) zur Druckregulierung angeordnet ist,
dadurch gekennzeichnet, daß dieses Antriebselement mechanisch mit der Antriebswelle (20a, 20b) der Zumeßpumpe verbunden ist.

2. Brennstoffversorgungssystem nach Anspruch 1, dadurch gekennzeichnet, daß das genannte Antriebselement eine Turbine (26) ist.

3. Brennstoffversorgungssystem nach einem der Ansprüche 1 und 2, dadurch gekennzeichnet, daß das Antriebselement (26) unmittelbar auf der Antriebswelle (20) der Zumeßpumpe (16) sitzt.

4. Brennstoffversorgungssystem nach einem der Ansprüche 1 und 2, dadurch gekennzeichnet, daß das Antriebselement (26) durch ein Hilfswellengehäuse (28), über das die genannte Antriebswelle von dem Turbomotor angetrieben wird, mechanisch mit der Antriebswelle (20b) der Zumeßpumpe (16) verbunden ist.
